# EUROPÄISCHE PATENTSCHRIFT

(11) **EP 2 343 505 B1**
(45) Veröffentlichungstag und Bekanntmachung des Hinweises auf die Patenterteilung: **01.01.2020**
(21) Anmeldenummer: 10015102.6
(22) Anmeldetag: 29.11.2010
(51) Int. Cl.: G01D 3/08, G01D 11/24, G01D 5/244

(54) **Sensor**
Sensor
Capteur

(30) Priorität: 23.12.2009 DE 202009017430 U
(43) Veröffentlichungstag der Anmeldung: 13.07.2011
(73) Patentinhaber: Liebherr-Werk Ehingen GmbH, 89584 Ehingen/Donau (DE)
(72) Erfinder: Morath, Erwin, 89584 Lauterach (DE)
(74) Vertreter: Laufhütte, Dieter

(56) Entgegenhaltungen:
- DE-A1- 19 825 464
- DE-A1-102005 005 995
- DE-A1-102007 035 326
- US-A1- 2004 015 282

## Beschreibung

Die vorliegende Erfindung betrifft einen Sensor zur Messung einer beliebigen Meßgröße, wobei der Sensor ein Sensorgehäuse mit einer Prüflingszuführung aufweist.

Um den strengen Anforderungen an die Sicherheit im Umgang mit komplexen Maschinen Herr zu werden, bedient man sich der Möglichkeit, wichtige Komponenten der Maschinen redundant oder diversitär auszulegen.

In diesem Zusammenhang ist für die ordnungsgemäße Arbeitsweise der Steuerung einer Maschine auch der Datenübertrag vom Sensor zum verarbeitenden Prozessor zur betrachten, da der Sensor unter bestimmten Umständen relevante Meßgrößen für den sicheren Betrieb der Maschine aufnimmt. Auch in diesem Bereich kann eine Redundanz notwendig werden, um die geforderten Sicherheitsbedingungen zu garantieren. Ein mögliches Fehlverhalten einzelner Komponenten der gesamten Meßkette läßt sich auf Grund der redundant vorliegenden Meßergebnisse detektieren.

Aus dem Stand der Technik ist eine Umsetzung eines derartigen sensorbasierten Meßsystems einer Maschine bekannt, deren Sensoranordnung redundant ausgelegt ist. So zeigen beispielsweise die US 2004/0015282 A1 und die DE 19825464 A1 Drucksensoren mit redundanten Druckmesselementen. Die DE 102005005995 A1 zeigt ein Sensorsystem mit redundanten Signalverarbeitungseinheiten. Das in den Figuren 1a bis 1c dargestellte System weist eine ein beliebiges Medium führende Leitung 1 auf, wobei der in der Leitung 1 herrschende Druck des Mediums als Meßgröße durch die Sensoranordnung erfaßt werden soll. Hierzu dienen die beiden Meßanschlüsse 2, 12, die voneinander beabstandet entlang der Leitung 1 angeordnet sind. Das zu überprüfende Medium innerhalb der Leitung 1 wird über die Meßanschlüsse 2 und 12 den beiden Meßmitteln 3 und 13 zugeführt, die wiederum über die Signalleitung 4 und 14 mit jeweils einer eigenen Prozessoreinheit 6 und 16 in Verbindung stehen.

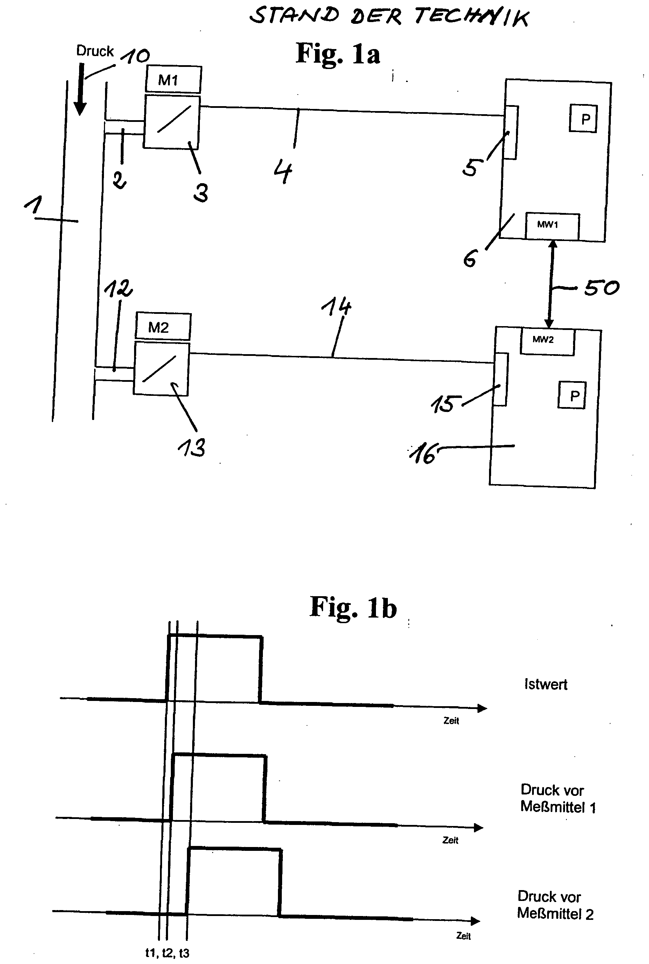

Sobald am Eingang der Leitung 1 ein Druckimpuls mit einem Istwert gemäß Figur 1b auftritt, setzt sich dieser in der Leitung 1 fort. Da die beiden Meßanschlüsse 2, 12 voneinander beabstandet sind, erreicht der Druckimpuls das Meßmittel 3 über den Meßanschluß 2 zu dem Zeitpunkt t₂ (siehe Figur 1b) und das Meßmittel 13 über den Meßanschluß 12 zu dem Zeitpunkt t₃.

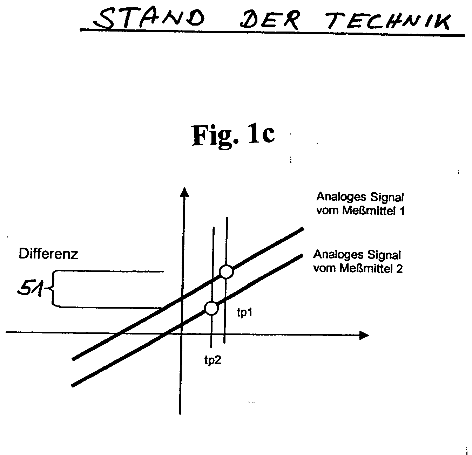

Beide Meßmittel 3 und 13 arbeiten voneinander unabhängig, da keine einheitliche Taktung vorgesehen ist. Die Meßmittel 3, 13 bilden die den Istwert repräsentierenden analogen elektrischen Signale, die der Figur 1c zu entnehmen sind. Die Signale werden über die beiden Signalleitungen 4 und 14 an die beiden Verarbeitungsprozessoren 6 und 16 übertragen. Auch die beiden Prozessoreinheiten 6 und 16 arbeiten unabhängig voneinander und damit nicht synchron. Somit ermitteln die Prozessoren mit zeitlichem Versatz die dem Istwert entsprechenden Meßwerte MW1 und MW2 anhand der über die Leitungen 4, 14 bereitgestellten elektrischen Werte.

Um mögliche Fehler der beiden unabhängigen Meßvorrichtungen zu detektieren, wird ein Meßwertvergleich 50 zwischen den beiden Prozessoreinheiten 6 und 16 initiiert. Ein wesentliches Problem der bekannten Sensoranordnung liegt darin begründet, dass die in Abhängigkeit der Zeit erzeugten einzelnen Meßwerte MW1 und MW2 aufgrund der zeitlichen Differenz 51 zu erheblichen Meßunsicherheiten führen. Diese Meßunsicherheiten sind beim Vergleich 50 der Meßergebnisse zu beachten, indem der Bereich für die tolerierbaren Abweichungen der beiden Meßwerte MW1 und MW2 voneinander größer ausgelegt wird. Erst nach Überschreitung der Abweichtoleranzen wird ein Fehlverhalten der Anordnung diagnostiziert.

Ziel der vorliegenden Erfindung ist es daher, eine Meßanordnung zu schaffen, die eine größere Sicherheit und eine feinere Reaktionsmöglichkeit auf mögliche Meßabweichungen bietet. Folglich ist es Aufgabe der Erfindung, einen Sensor aufzuzeigen, der wesentlich kleinere Toleranzgrenzen zuläßt.

Die vorliegende Aufgabe wird durch einen Sensor mit den Merkmalen des Anspruchs 1 gelöst. Demnach weist ein derartiger Sensor mindestens zwei Meßwertaufnehmer und wenigstens zwei Verarbeitungseinheiten innerhalb des Sensorgehäuses auf. Der Meßwertaufnehmer ist als der erste Teil des Sensors definiert, der auf eine zu erfassende Meßgröße unmittelbar anspricht. Bevorzugt steht jeder Meßwertaufnehmer über eine Signalleitung mit genau einer Verarbeitungseinheit in Verbindung, so dass die den Meßwert repräsentierende Signalgröße an die Verarbeitungseinheit übertragbar ist. Zur Steigerung der Zuverlässigkeit bzw. Sicherheit des Sensors, sind sowohl Meßwertaufnehmer als auch Verarbeitungseinheit redundant und/oder diversitär ausgeführt. Die mindestens zwei Meßwertaufnehmer nehmen unabhängig voneinander mindestens zwei Meßwerte auf und übermitteln diese an ihre angeschlossene Verarbeitungseinheit. Die erfindungsgemäße Anordnung der wenigstens zwei Meßwertaufnehmer in einem Sensorgehäuse mit nur einer Prüflingszuführung garantiert, dass die tatsächlichen Istwerte der zu überprüfenden Meßgröße ohne zeitlichen Versatz an beiden Meßwertaufnehmern anliegen. Bevorzugt sind die Meßwertaufnehmer und/oder die Verarbeitungseinheiten diversitär ausgeführt.

Im Gegensatz dazu verfolgt das aus dem Stand der Technik bekannte Sensorsystem den Ansatz, zwei vollkommen unabhängige Sensoren über zwei separate Prüflingszuführungen an der Leitung anzuordnen. Aufgrund der räumlich zueinander distanzierten Anordnung der Sensoren erreicht der tatsächliche Istwert des Mediums die Sensoren nur zeitverzögert, was zu erheblichen Abweichungen der erfaßten Meßwerte führt.

Die erfindungsgemäße minimal beabstandete Anordnung der beiden Meßwertaufnehmer im Sensorgehäuse reduziert den zeitlichen Versatz der erfaßten Meßwerte erheblich bzw. schließt den Zeitversatz nahezu aus. Besonders bevorzugt sind alle Meßwertaufnehmer mit gleichem Abstand zur Eintrittsöffnung der Prüflingszuführung angeordnet. Demnach stellt sich eine Änderung der Meßgröße zeitgleich an allen Meßwertaufnehmern ein. Ferner stellt der erfindungsgemäße Sensor eine einfache Umsetzungsmöglichkeit eines redundant ausgelegten Sensorsystems dar, da die Redundanz bereits im Sensorgehäuse integriert ist. Eine komplexe Anordnung mehrerer separater unabhängiger Sensoren ist nicht mehr erforderlich.

Besonders bevorzugt sind die mindestens zwei Meßwertaufnehmer unmittelbar nebeneinander innerhalb oder im Endbereich der Prüflingszuführung des Sensors angeordnet. Denkbar ist auch, dass die Meßwertaufnehmer an gegenüberliegenden Stellen innerhalb der Prüflingszuführung angebracht sind. Je geringer die räumliche Distanz zwischen zwei Messwertaufnehmern ist, desto geringer ist die zeitlich verzögerte Erfassung des Istwertes der Meßgröße. Durch die erfindungsgemäße Anordnung läßt sich der Zeitversatz zwischen der Aufnahme der Istwerte vernachlässigen. Bei fehlerfreier Funktionalität des Sensors ergeben sich nahezu zeitgleich anliegende Istwerte an den Ausgängen der Meßwertaufnehmer.

Ist das Meßergebnis von externen Störgrößen abhängig, so sind bevorzugt ein oder mehrere Sekundärsensoren innerhalb des Sensorgehäuses angeordnet. Denkbar sind geeignete Temperatursensoren bzw. Sensoren zur Erfassung des atmosphärischen Drucks. Insbesondere fließen die von den Sekundärsensoren bereitgestellten Meßwerte der Verarbeitungseinheit zu. Vorteilhafterweise sind hierdurch äußere Einflüsse auf den Sensor mittels der von den Sekundärsensoren zur Verfügung gestellten Meßdaten kompensierbar.

Erfindungsgemäß sind die wenigstens zwei Verarbeitungseinheiten miteinander gekoppelt. Die wenigstens zwei Verarbeitungseinheiten arbeiten bevorzugt auf Basis einer gemeinsamen Taktquelle oder verwenden separate Taktquellen, die miteinander synchronisierbar sind. Die Verwendung einer gemeinsamen Zeitbasis bzw. die synchronisierte Signalverarbeitung der Verarbeitungseinheiten reduziert bzw. optimiert den zeitlichen Versatz der an den Ausgängen der Verarbeitungseinheiten anliegenden Meßwerte.

Um die verarbeiteten Meßwerte an eine zentrale Einheit weiterzuvermitteln, ist es denkbar, dass der Sensor, insbesondere wenigstens eine Verarbeitungseinheit, an ein zentrales Bussystem, insbesondere CAN-Bussystem oder Liebherr-System-Bus, gekoppelt bzw. koppelbar ist. Die in die Verarbeitungseinheit vorzugsweise integrierte Sende- und/oder Empfangseinheit legt hierzu die ermittelten Meßwerte bzw. die verarbeiteten Meßsignale auf den Systembus. Es kann vorgesehen sein, dass die Verarbeitungseinheit parallel zum Sendeprozess das gesendete Signal auf Richtigkeit prüft. Die Verarbeitungseinheit hört demnach gleichzeitig ihr übertragenes Signal ab. Möglich ist es, dass sämtliche Verarbeitungseinheiten des Sensors an das Bussystem angeschlossen sind. In diesem Fall sendet eine Verarbeitungseinheit ihr Signal über den Systembus und alle weiteren Verarbeitungseinheiten hören das von der einen Verarbeitungseinheit auf den Bus gelegte Sendesignal mit und überprüfen dieses auf Richtigkeit bzw. stellen einen Vergleich zwischen Bussignal und ihrem Erwartungswert an. Besonders bevorzugt zieht wenigstens eine Verarbeitungseinheit im Fall einer Fehlerdetektion das entsprechende Bussignal für eine bestimmte Zeit, insbesondere 512 µs, auf Masse. Dies entspricht dem korrespondierenden Timeout des Übertragungsprotokolls des verwendeten Bussystems, wodurch alle am Bus anliegenden Signale innerhalb der Empfangseinheiten für ungültig erklärt bzw. verworfen werden.

Der gegenseitige Austausch der Meßwerte der einzelnen Verarbeitungseinheiten oder sonstiger Daten ist erfindungsgemäß über die Signalverbindung zwischen den Verarbeitungseinheiten realisiert. Folglich stellt jede Verarbeitungseinheit ihren ermittelten Meßwert einer oder allen weiteren Verarbeitungseinheiten zur Verfügung. Es ist vorgesehen, dass innerhalb wenigstens einer Verarbeitungseinheit ein Mittel vorgesehen ist, wodurch wenigstens ein erster Meßwert mit wenigstens einem weiteren Meßwert vergleichbar ist. Weiterhin ist es vorgesehen, dass wenigstens eine Verarbeitungseinheit ihren eigenen Meßwert mit den Meßwerten aller weiteren verbundenen Verarbeitungseinheiten vergleicht.

Das Mittel ist derart ausgeführt, dass eine Plausibilitätsprüfung, d.h. ein Kreuzvergleich, zwischen mindestens zwei Meßwerten durchführbar ist. Liegen die Abweichungen innerhalb definierbarer Toleranzgrenzen, wird die Messung als plausibel eingestuft und die wenigstens zwei Verarbeitungseinheiten einigen sich auf einen einheitlichen für alle oder zumindest einen Teil der Verarbeitungseinheiten geltenden Meßwert. Dieser wird sodann im Ausgangsbereich aller oder einem Teil der Verarbeitungseinheiten als Binärwert abgelegt. Beispielsweise vergleichen zwei Verarbeitungseinheiten ihre Meßwerte miteinander. Im Falle nur geringer tolerierbarer Abweichungen legt die erste Verarbeitungseinheit ihren Meßwert im Ausgangsbereich ab und die zweite oder alle weiteren Verarbeitungseinheiten verwerfen ihre eignen Meßwerte und legen statt dessen den einheitlichen Meßwert der ersten Verarbeitungseinheit in ihrem Ausgangsbereich ab. Die Bitmuster der abgelegten Werte sind demnach in allen Ausgangsbereichen identisch.

Liegen die Abweichungen der beiden verglichenen Meßwerte außerhalb des definierbaren Toleranzbereichs, so ist das Meßergebnis wenigstens einer Verarbeitungseinheit als fehlerhaft markierbar. Die gekennzeichneten Meßwerte sind im Ausgangsbereich der wenigstens zwei Verarbeitungseinheiten ablegbar und gegebenenfalls über ein angeschlossenes Bussystem übertragbar. Ein Empfänger kann aufgrund der Markierung auf eine Fehlfunktion des Sensors schließen.

Das Mittel der wenigstens einen Verarbeitungseinheit ist besonders bevorzugt durch einen programmierbaren Mikroprozessor bzw. Digitalen-Signal-Prozessor (DSP) realisiert. Die Kopplung der Verarbeitungseinheiten bzw. der Mikroprozessoren ist durch die zentrale Taktspeisung der Mikroprozessoren gegeben. Die Synchronisation der verwendeten Mikroprozessoren minimiert den zeitlichen Versatz zwischen den Meßwerten, da sämtliche Verarbeitungsoperationen innerhalb der Mikroprozessoren zeitgleich bzw. synchron zueinander ausführbar sind. Die einzelnen Istwerte der Meßgröße sind demnach nahezu zeitgleich innerhalb der Mikroprozessoren auswertbar und ausgebbar.

Es ist vorstellbar, dass ein Mittel zur Verschlüsselung bzw. Verpackung des zu übertragenden Meßwerts vorgesehen ist. Denkbar ist die Anwendung geeigneter Datenverarbeitungsalgorithmen auf den digitalisierten Meßwert, wie CRC und/oder CRT-Algorithmen. Der Meßwert wird demnach bereits innerhalb des Sensors verschlüsselt und über ein angeschlossenes Bussystem übertragen. Auf Empfängerseite besteht die Möglichkeit, aufgetretene Verarbeitungsfehler des Meßwerts mittels der Verschlüsselung zu erkennen und vorteilhafterweise zu korrigieren.

In einer besonders bevorzugten Ausgestaltung der Erfindung weist das Sensorgehäuse einen Gewindeanschluß auf. Es kann vorgesehen sein, dass die Prüflingszuführung durch den Gewindeanschluß verläuft. Der gesamte Sensor ist über den Gewindeanschluß an eine beliebige Leitung mit der zu messenden Größe anschließbar.

Grundsätzlich gilt, dass ein derartiger Sensor mindestens zwei Meßwertaufnehmer für beliebige zu erfassende Meßgrößen aufweist. Bevorzugt eignet sich der Sensor zur Messung einer oder mehrerer verschiedener Meßgrößen wie Druck, Winkel, Drehung, Neigung, Länge, Entfernung, Schall, Helligkeit, Feuchtigkeit, Richtung oder Füllstand. Die Kompatibilität des Sensors ist lediglich von dem oder den verbauten Meßwertaufnehmer abhängig. Ferner ist zweckmäßig die Prüflingszuführung an die zu erfassende Meßgröße bzw. das Medium anzupassen. Die Art der Meßwertverarbeitung ist bevorzugt bei allen Sensoren identisch. Alle Sensoren weisen bevorzugt wenigstens zwei redundant und/oder diversitär zueinander angeordnete Meßwertaufnehmer und/oder Verarbeitungseinheiten auf. Mögliche Ausführungsformen des erfindungsgemäßen Sensors sind bevorzugt Seillängengeber, Lasersensoren, Drehwinkelmesser, Neigungsmesser und Längenmesser über Drehgeber.

Weitere Merkmale, Einzelheiten und Vorteile der Erfindung werden anhand der in den Zeichnungen dargestellten Ausführungsbeispiele näher erläutert. Es zeigen:
- Figur 1a - 1c:: ein nach dem Stand der Technik bekanntes redundantes Sensorsystem, sowie zwei dazugehörige Meßdiagrammdarstellungen einzelner Meßwerte,
- Figur 2:: ein Ausführungsbeispiel des erfindungsgemäßen Sensors am Beispiel eines Drucksensors und
- Figur 3:: das Übertragungsprotokoll des Sensors aus Figur 2.

Die Figuren 1a bis 1c zeigen eine nach dem Stand der Technik bekannte Meßanordnung, die bereits ausführlich im einleitenden Teil der Beschreibung diskutiert wurde.

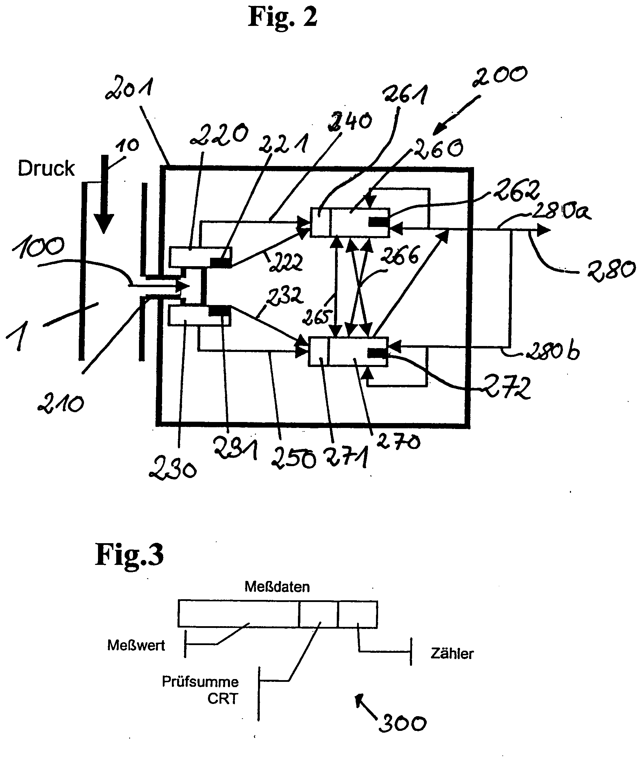

Figur 2 zeigt den schematischen Aufbau eines Ausführungsbeispiels des erfindungsgemäßen Sensors 200. In dem Ausführungsbeispiel aus Figur 2 arbeitet der dargestellte Sensor 200 als Drucksensor zur Erfassung des hydraulischen Drucks des Mediums innerhalb der Leitung 1. Das Gewinde am Sensorgehäuse 201 des Sensors 200 wird in die passende Schraubverbindung der Druckleitung 1 eingeschraubt. Bei der Befüllung der Leitung 1 mit Hydrauliköl oder einem ähnlichen Druckmedium wird auch der Raum der Prüflingszuführung 210 bis vor die darin angeordneten Meßwertaufnehmer 220, 230 befüllt. Die Meßwertaufnehmer 220, 230 wandeln die erfaßte Druckmeßgröße (Istwert) innerhalb der Prüflingszuführung 210 in entsprechende elektrische Signale um, welche über die beiden Signalleitungen 240, 250 den Eingängen 261, 271 der beiden Verarbeitungseinheiten 260, 270 zugeführt werden. Eine geschickte Lageauswahl der beiden Meßwertaufnehmer 220, 230 besteht darin, eine Anordnung der Meßwertaufnehmer 220, 230 mit möglichst kurzen und gleich langen Abständen zur Eintrittsöffnung der Prüflingszuführung 210 zu wählen. An beiden Meßwertaufnehmern 220, 230 stellen sich zeitgleich identische Meßwerte ein.

Zur Erfassung von umweltbedingten Störgrößen weist jeder Meßwertaufnehmer 220, 230 jeweils einen Sekundärsensor 221, 231 auf. Es sind auch mehrere Sekundärsensoren zur Erfassung einer oder unterschiedlicher Störgrößen, wie beispielsweise Temperatur oder Luftdruckeinflüsse, möglich. Aufgrund der großen Nähe der Sekundärsensoren 221, 231 würde technisch auf Kosten der Redundanz auch ein Sekundärsensor 221, 231 ausreichen. Die ermittelten Störeinflüsse werden zur Störgrößenkompensierung an die Eingänge 261, 271 der zuständigen Verarbeitungseinheiten 260, 270 über die Signalleitungen 222, 232 übertragen. Beide Sekundärsensoren 221, 231 sind als Temperatursensoren ausgeführt, um temperaturabhängige Meßschwankungen des Sensors 200 zu kompensieren. Die Ausführung als Drucksensor, der den vorherrschenden atmosphärischen Druck auf den Sensor 200 bzw. innerhalb des Sensorgehäuses 201 erfaßt und zur Kompensierung weiterleitet, ist ebenfalls möglich.

Während des Betriebs des Sensors 200 liefern die Meßwertaufnehmer 220, 230 sowie die Sekundärsensoren 221, 231 kontinuierlich Meßsignale über die Signalleitungen 240, 250, 222, 232 an die entsprechenden Eingänge 261, 271 der beiden Verarbeitungseinheiten 260, 270.

Die beiden Verarbeitungseinheiten 260, 270 sehen eine integrierte Schaltkreisanordnung vor, deren wesentlicher Bestandteil ein programmierbarer Mikroprozessor bzw. DSP ist. Die wesentliche Aufgabe des Prozessors besteht darin, die an den Eingängen 261, 271 anliegenden elektrischen Meßsignale der Meßwertaufnehmer 220, 230 sowie der Sekundärsensoren 221, 231 zu verarbeiten. Zum einen erfolgt die Analog-Digital-Wandlung der anliegenden Werte, zum anderen stellt jede Verarbeitungseinheit 260, 270 ihren eigenen gewandelten Meßwert der anderen Verarbeitungseinheit über die Verbindung 266 zur Verfügung. Zur Überwachung der ordnungsgemäßen Funktionalität des Sensors erfolgt innerhalb der Verarbeitungseinheiten 260, 270 eine Plausibilitätsprüfung der vorliegenden Meßwerte nach der Methode des Kreuzvergleichs. Da die jeweiligen Meßwerte zeitabhängig und kontinuierlich an den Eingängen 261, 271 der beiden Verarbeitungseinheiten 260, 270 anliegen, arbeiten die beiden Verarbeitungseinheiten 260, 270 zweckmäßig mit einer gemeinsamen Zeitbasis 265. Beide Mikroprozessoren werden entweder durch eine gemeinsame Taktquelle gespeist oder verwenden separate Taktquellen, die miteinander synchronisiert sind. Entscheidend ist die Verwendung einer gemeinsamen Zeitbasis 265.

Falls die Abweichungen der Meßwerte die definierbaren Toleranzgrenzen nicht überschreiten, wird die Messung als plausibel eingestuft. Ein Meßwert, in der Regel der von der Verarbeitungseinheit 260, wird daraufhin von beiden Verarbeitungseinheiten 260, 270 als Meßwert aufgenommen und sodann im Ausgangsbereich 262, 272 zur Übertragung abgelegt. Somit sind nach der Digitalisierung und dem Vergleich der Meßwerte während des Sensorbetriebs ohne Fehlverhalten identische Bitmuster in den Ausgangsbereichen 262, 272 sichergestellt. Zur Weiterleitung der Sensorwerte an die zentrale Auswerteeinheit einer Maschine genügt die Übertragung des vereinheitlichten Meßwerts.

Liegen die Abweichungen außerhalb des vorgegebenen Toleranzbereichs, so wird die Messung allgemein als fehlerhaft erachtet, die Meßwerte entsprechend gekennzeichnet und mitsamt der Kennzeichnung in den Ausgangsbereich 262, 272 der beiden Verarbeitungseinheiten 260, 270 abgelegt.

Für die Übertragung der sensorisch erfaßten Meßwerte des erfindungsgemäßen Sensors 200 an eine beliebige Vorrichtung läßt sich der Sensor 200 an ein bestehendes Bussystem anschließen. Der erfindungsgemäße Sensor 200 aus Figur 2 ist an den bereits aus der Druckschrift DE 196 47 131 C2 bekannten Liebherr-Systembus koppelbar.

Zum Anschluß an das Bussystem weist der Sensor 200 die Anschlußstelle 280 auf, die sich gegebenenfalls innerhalb des Gehäuses 201 in die beiden Zweigbusse 280a, 280b aufteilt. Die beiden Verarbeitungseinheiten 260, 270 sind über die Zweigbusse 280a, 280b mit der Busleitung 280 des Systembusses verknüpft.

Sobald von der zentralen Einheit einer Steuerung ein Meßwert für den Druck in der Leitung 1 benötigt wird, sendet diese ein Signal über die Signalleitung 280 an die beiden Verarbeitungseinheiten 260, 270 des erfindungsgemäßen Sensors 200. Die Verarbeitungseinheit 260 reagiert auf das empfangene Signal mit der Übermittlung des im Ausgangsbereich 262 abgelegten Meßwerts. Die Übertragung erfolgt über das angeschlossene Bussystem unter Verwendung des der Sende- und Empfangseinheit der Verarbeitungseinheit 260 bekannten Sendeprotokolls. Während des Sendeprozesses überprüft die Verarbeitungseinheit 260 gleichzeitig das von ihr auf den Bus gelegte Sendesignal auf Richtigkeit. Analog dazu verfährt die Verarbeitungseinheit 270, wobei diese ausschließlich das von der Verarbeitungseinheit 260 auf den Systembus gelegte Signal auf Richtigkeit überprüft, indem das Signal mit ihrem Erwartungswert, also dem im Ausgang 272 abgelegten Meßwert, verglichen wird. Identifiziert eine der überprüfenden Verarbeitungseinheiten 260, 270 einen Übertragungsfehler, so macht die Verarbeitungseinheit 260, 270 das Protokoll ungültig, zum Beispiel beim Liebherr-Systembus durch Ziehen des Bussignals auf Masse für eine bestimmte Zeit, insbesondere 512 µs. Die Zeitspanne charakterisiert ein entsprechendes Timeout des Liebherr-Systembusprotokolls, so dass sämtliche vom Bus übertragenen Sendesignale von den einzelnen Empfangseinheiten verworfen werden. Der Sendezyklus wird wiederholt oder beginnt mit der Übertragung der nachfolgenden Meßwerte.

Bevor die Meßwerte über das angeschlossene Bussystem unter Verwendung des Busprotokolls übertragen werden, wird der Datenblock 300 aus Figur 3 gebildet. Zur Verschlüsselung des Meßwerts wird ein geeigneter Sicherungsalgorithmus verwendet, der die Prüfsummenbildung über den Meßwert und die Anwendung eines Restaurationsalgorithmus umfaßt. Als Beispiel sei eine Kombination aus CRC und CRT genannt. Zur Identifikation des Meßwerts bzw. des Datenblocks 300 wird dem Datenblock 300 ein Zähler angefügt. Das Verpacken bzw. Verschlüsseln der Meßwerte erhöht die Sicherheit, da Übertragungsfehler der Meßwerte auf der Empfängerseite erkannt und bevorzugt behoben werden können.

Die vorgenannte Aufgaben der Verarbeitungseinheiten 260, 270 lassen sich diesen nach belieben zuordnen. Denkbar sind Ausführungen, in denen eine Verarbeitungseinheit ausschließlich als Beobachter fungiert. Ebenso möglich ist auch eine alternierende Zuordnung der einzelnen Aufgaben an die jeweiligen Verarbeitungseinheiten 260, 270.

Da die beiden Meßwertaufnehmer 220, 230 sehr eng beieinander innerhalb der Prüflingszuführung 210 angeordnet sind und die Lage optimal ausgewählt wurde, liegt an beiden Meßwertaufnehmern 220, 230 ein nahezu identischer Istwert des herrschenden Drucks innerhalb der Leitung 1 an. Der Druck läßt sich gleichzeitig, gegebenenfalls auf Abruf, messen. Weiterhin wird durch die zeitliche Synchronisation der beiden Verarbeitungseinheiten 260, 270 im vollfunktionsfähigen Sensorbetrieb die Meßwertabweichung weitestgehend reduziert. Hierdurch lassen sich die Toleranzgrenzen äußerst klein definieren, so dass auch kleinere kritische Meßabweichungen innerhalb des Sensors 200 detektiert werden können und eine anschließende Fehleranalyse gestartet werden kann.

Das Ausführungsbeispiel des erfindungsgemäßen Sensors 200 dient zur meßtechnischen Erfassung eines Drucks innerhalb einer Leitung 1. Eine derartige Ausgestaltung des erfindungsgemäßen Sensors ist jedoch nicht auf die Messung des Parameters Druck beschränkt. Weitere Ausführungen des Sensors 200 sehen dabei die Messung eines Winkels, Drehung, Neigung, Länge, Entfernung, Schall, Helligkeit, Feuchtigkeit, Richtung oder Füllstand vor. Hierzu müssen lediglich die beiden verwendeten Meßwertaufnehmer 220, 230 an das entsprechende Medium angepaßt und die Prüflingszuführung 210 abgeändert werden. Mögliche Ausführungen sind ein Seillängengeber, Lasersensor, Drehwinkelmesser, Neigungsmesser und Längenmesser über Drehgeber.

In diesem Zusammenhang soll die Ausführung des erfindungsgemäßen Sensors 200 als Neigungssensor näher erläutert werden. Die Sensortopologie läßt sich in zwei Kanäle unterteilen, die jeweils durch einen Meßwertaufnehmer und eine Verarbeitungseinheit gebildet werden. Die beiden getrennt angeordneten Meßwertaufnehmer erlauben eine Erfassung der Neigung um zwei Achsen und übermitteln ihre Meßsignale zur Auswertung an ihre zugeordnete Verarbeitungseinheit. Die Verarbeitungseinheit der ersten Kanals übernimmt die Steuerung der Busanbindung sowie die Datenübertragung des Sensors. Die zweite Verarbeitungseinheit fungiert ausschließlich als Kontrollorgan, das unter bestimmten Umständen die Datenübertragung des Sensors unterbrechen kann.

Um eine Diversität des Neigungssensors zu erreichen sind zumindest die beiden Meßwertaufnehmer diversitär ausgeführt. In einem konkreten Ausführungsbeispiel besteht der Neigungssensor aus einem Meßwertaufnehmer vom Bauteiltyp SCA 103T, der über eine SPI-Schnittstelle an seine Verarbeitungseinheit angebunden ist. Als zweiter Meßwertaufnehmer wird ein Bauteil der Reihe ADIS16003 eingesetzt.

Ein derartiger Neigungssensor basiert vorteilhafterweise auf Grundlage der MEMS-Technik (Micro-Electro-Mechanical-System) zur Neigungserfassung. Die Sensorik des Neigungssensors mißt die Krafteinwirkung der Erdbeschleunigung auf flexibel gelagerte Platten einer Kapazität. Da sich der wirksame Kraftvektor mit relativer Neigung zum Erdmittelpunkt ändert, kann ein entsprechender Winkel bestimmt werden. Um die Genauigkeit der Messung zu erhöhen, werden im Meßkanal pro Achse zwei um 180° verdrehte Meßwertaufnehmer eingesetzt, deren Meßwerte differentiell ausgewertet werden. Die Ausgabe und Berechnung des absoluten Neigungswinkels erfolgt mit einer Meßauflösung von 0.02° für die Mitte und einer Meßauflösung von 0.4° im Bereich von ± 25°.

Zur Signalisierung verschiedener Sensorzustände dienen ein oder mehrere LEDs, die vorzugsweise sichtbar am Sensorgehäuse angeordnet sind. Zur Kennzeichnung des aktuellen Sensorzustands dient ein Statusbyte, dass zusammen mit dem Meßwert übertragbar ist. Im Fehlerfall wird das Statusbyte um den entsprechenden Fehlercode ergänzt.

## Patentansprüche

1. Sensor (200) zur Messung einer beliebigen Meßgröße (10), wobei der Sensor (200) ein Sensorgehäuse (201) mit einer Prüflingszuführung (210) aufweist,
**dadurch gekennzeichnet,**
**dass** mindestens zwei Meßwertaufnehmer (220, 230) und wenigstens zwei miteinander gekoppelte Verarbeitungseinheiten (260, 270) im Sensorgehäuse (201) angeordnet sind, wobei die mindestens zwei Messwertaufnehmer (220, 230) und die wenigstens zwei Verarbeitungseinheiten (260, 270) jeweils paarweise zueinander redundant und/oder diversitär sind, wobei wenigstens eine Verarbeitungseinheit (260, 270) ein Mittel zum Kreuzvergleich ihres eigenen Meßwertes mit den Meßwerten aller weiteren verbundenen Verarbeitungseinheiten (260, 270) vorsieht.

2. Sensor (200) nach Anspruch 1, **dadurch gekennzeichnet, dass** die Meßwertaufnehmer (220, 230) räumlich eng beieinander in der Prüflingszuführung (210) angeordnet sind.

3. Sensor (200) nach Anspruch 1 oder 2, **dadurch gekennzeichnet, dass** ein oder mehrere Sekundärsensoren (221, 231), insbesondere Temperatursensoren und/oder Drucksensoren, innerhalb des Sensors (200) angeordnet sind.

4. Sensor (200) nach einem der vorhergehenden Ansprüche, **dadurch gekennzeichnet, dass** wenigstens eine Verarbeitungseinheit (260, 270) an ein Bussystem (280), insbesondere CAN-Bussystem, Liebherr-System-Bus oder Ethernet basierendes Bussystem, gekoppelt bzw. koppelbar ist.

5. Sensor (200) nach einem der vorhergehenden Ansprüche, **dadurch gekennzeichnet, dass** ein abgestimmter einheitlicher Meßwert von allen oder zumindest einem Teil der Verarbeitungseinheiten (260, 270) übertragbar ist.

6. Sensor (200) nach Anspruch 5, **dadurch gekennzeichnet, dass** der abgestimmte einheitliche Meßwert durch das Mittel zum Kreuzvergleich der Verarbeitungseinheit (260, 270) markierbar ist, falls die Abweichung der einzelnen Meßwerte der Verarbeitungseinheiten (260, 270) definierbare Toleranzgrenzen überschreiten.

7. Sensor (200) nach einem der Ansprüche 5 oder 6, **dadurch gekennzeichnet, dass** das Mittel zum Kreuzvergleich wenigstens einer Verarbeitungseinheit (260, 270) ein Mikroprozessor ist, wobei die einzelnen Mikroprozessoren mit einer synchronisierten Zeitbasis arbeiten.

8. Sensor (200) nach einem der vorhergehenden Ansprüche, **dadurch gekennzeichnet, dass** ein Mittel zur Verschlüsselung bzw. Verpackung des zu übertragenden Meßwerts vorgesehen ist.

9. Sensor (200) nach einem der vorhergehenden Ansprüche, **dadurch gekennzeichnet, dass** das Gehäuse (201) einen Gewindeanschluß aufweist.

10. Sensor (200) nach einem der vorhergehenden Ansprüche, **dadurch gekennzeichnet, dass** der Sensor (200) zur Messung einer oder mehrerer der Meßparameter Druck, Winkel, Drehung, Neigung, Länge, Entfernung, Schall, Helligkeit, Feuchtigkeit, Richtung oder Füllstand dient.

## Claims

1. A sensor (200) for measurement of any desired measured variable (10), wherein the sensor (200) has a sensor housing (201) with a specimen feed (210),
**characterized in that**
at least two measured value pick-ups (220, 230) and at least two processing units (260, 270) coupled to each other are arranged in the sensor housing (201), with the at least two measured value pick-ups (220, 230) and the at least two processing units (260, 270) each being redundant pairwise with respect to one another and/or diverse, with at least one processing unit (260, 270) providing a means for cross comparison of its own measured value with the measured values of all further coupled processing units (260, 270).

2. A sensor (200) in accordance with claim 1, **characterized in that** the measured value pick-ups (220, 230) are arranged spatially close to one another in the specimen feed (210).

3. A sensor (200) in accordance with either of claims 1 or 2, **characterized in that** one or more secondary sensors (221, 231), in particular temperature sensors and/or pressure sensors, are arranged within the sensor (200).

4. A sensor (200) in accordance with one of the preceding claims, **characterized in that** at least one processing unit (260, 270) is or can be coupled to a bus system (280), in particular to a CAN bus system, Liebherr system bus or Ethernet based bus system.

5. A sensor (200) in accordance with one of the preceding claims, **characterized in that** a coordinated uniform measured value can be transferred from all or at least some of the processing units (260, 270).

6. A sensor (200) in accordance with claim 5, **characterized in that** the coordinated uniform measured value can be marked by the means for the cross comparison of the processing unit (260, 270), if the deviation of the individual measured values of the processing units (260, 270) exceeds definable tolerance limits.

7. A sensor (200) in accordance with one of the claims 5 or 6, **characterized in that** the means for the cross comparison of at least one processing unit (260, 270) is a microprocessor, with the individual microprocessors working with a synchronized time basis.

8. A sensor (200) in accordance with one of the preceding claims, **characterized in that** a means for encoding or packaging the measured value to be transferred is provided.

9. A sensor (200) in accordance with one of the preceding claims, **characterized in that** the housing (201) has a threaded connection.

10. A sensor (200) in accordance with one of the preceding claims, **characterized in that** the sensor (200) serves for measurement of one or more of the measurement parameters pressure, angle, rotation, inclination, length, distance, noise, brightness, moisture, direction or filling level.

## Revendications

1. Capteur (200) destiné à la mesure d'une grandeur à mesurer (10) quelconque, le capteur (200) comportant un boîtier de capteur (201) doté d'une admission d'échantillon (210),
**caractérisé en ce que**
au moins deux transducteurs (220, 230) et au moins deux unités de traitement (260, 270) couplées l'une à l'autre sont disposés dans le boîtier de capteur (201), les au moins deux transducteurs (220, 230) et les au moins deux unités de traitement (260, 270) étant respectivement redondants de manière homogène et/ou hétérogène par paire, au moins une unité de traitement (260, 270) prévoyant un moyen de comparaison croisée de sa propre valeur de mesure avec les valeurs de mesure de toutes les autres unités de traitement (260, 270) reliées.

2. Capteur (200) selon la revendication 1, **caractérisé en ce que** les transducteurs (220, 230) sont disposés dans l'admission d'échantillon (210) à proximité étroite les uns des autres dans l'espace.

3. Capteur (200) selon la revendication 1 ou 2, **caractérisé en ce qu'**un ou plusieurs capteurs secondaires (221, 231), en particulier capteurs de température et/ou capteurs de pression, sont disposés à l'intérieur du capteur (200).

4. Capteur (200) selon l'une des revendications précédentes, **caractérisé en ce qu'**au moins une unité de traitement (260, 270) est ou peut être couplée à un système de bus (280), en particulier un système de bus CAN, un système de bus Liebherr System Bus ou un système de bus basé sur Ethernet.

5. Capteur (200) selon l'une des revendications précédentes, **caractérisé en ce qu'**une valeur de mesure identique convenue peut être transmise par toutes les unités de traitement (260, 270) ou au moins par une partie de celles-ci.

6. Capteur (200) selon la revendication 5, **caractérisé en ce que** la valeur de mesure identique convenue peut être marquée par le moyen de comparaison croisée de l'unité de traitement (260, 270), si l'écart entre les différentes valeurs de mesure des unités de traitement (260, 270) dépasse des limites de tolérance pouvant être définies.

7. Capteur (200) selon la revendication 5 ou 6, **caractérisé en ce que** le moyen de comparaison croisée d'au moins une unité de traitement (260, 270) est un microprocesseur, les différents microprocesseurs fonctionnant avec une base de temps synchronisée.

8. Capteur (200) selon l'une des revendications précédentes, **caractérisé en ce qu'**un moyen de chiffrement ou d'empaquetage de la valeur de mesure à transmettre est prévu.

9. Capteur (200) selon l'une des revendications précédentes, **caractérisé en ce que** le boîtier (201) comporte un raccord fileté.

10. Capteur (200) selon l'une des revendications précédentes, **caractérisé en ce que** le capteur (200) sert à mesurer un ou plusieurs des paramètres mesurés pression, angle, rotation, inclinaison, longueur, distance, son, luminosité, humidité, direction ou niveau de remplissage.
